(19)

Europäisches
Patentamt
European
Patent Office
Office européen
des brevets

(11) **EP 3 893 164 A1**

(12) **EUROPEAN PATENT APPLICATION**

(43) Date of publication:
**13.10.2021 Bulletin 2021/41**

(51) Int Cl.:
**G06N 3/04** *(2006.01)*　　　　**G06N 3/08** *(2006.01)*

(21) Application number: **21154524.9**

(22) Date of filing: **01.02.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.04.2020　JP 2020068626**

(71) Applicant: **FUJITSU LIMITED**
**Kanagawa 211-8588 (JP)**

(72) Inventor: **Danjo, Takumi**
**Kanagawa, 211-8588 (JP)**

(74) Representative: **Hoffmann Eitle**
**Patent- und Rechtsanwälte PartmbB**
**Arabellastraße 30**
**81925 München (DE)**

(54) **LEARNING PROGRAM, LEARING METHOD, AND LEARNING APPARATUS**

(57)　A learning program executed by a computer, the learning program includes executing, in learning processing that is repeatedly executed for a model having a plurality of layers, update processing of a value of a parameter for at least one update suppression layer among the plurality of layers just once every k times (k is an integer of 2 or more) of the learning processing; and calculating, when the update processing of the value of the parameter for the update suppression layer is executed, a first value of the parameter after the update by a gradient descent method to which a momentum method is applied, by using a second value of the parameter calculated in the learning processing k times before and a third value of the parameter calculated in the learning processing 2k times before.

FIG. 6

○ : Lp NORM OF Δw IS LARGER THAN T
● : Lp NORM OF Δw IS T OR LESS
— : WEIGHT UPDATE PROCESSING IS SKIPPED

EP 3 893 164 A1

**Description**

[Field]

The embodiments discussed herein are related to a learning program, a learning method, and a learning apparatus.

[Background Art]

Machine learning is sometimes performed as one of data analyses using a computer. In machine learning, training data indicating a known case is input to a computer. The computer analyzes the training data and learns a model, which is a generalized relationship between a factor (sometimes called an explanatory variable or an independent variable) and a result (sometimes called an objective variable or a dependent variable). The learned model may be used for prediction of a result for an unknown case. For example, a character recognition model for recognizing handwritten characters is learned.

In machine learning, every time learning is repeated, a parameter value included in a model is updated so that a result of inference using the model gets closer to ground truth. A gradient descent method may be used as a method for updating a parameter. In a gradient descent method, a gradient of a loss function indicating an error between a learning result and ground truth is calculated, and the parameter is updated in a descent direction in the gradient. Gradient descent methods include stochastic gradient descent (SGD) in which a parameter is updated based on a gradient every time learning is performed with each of randomly sorted pieces of training data.

In SGD, learning may take time in a case where the loss function has a large curvature. Thus, a momentum method may be used as a method for speeding up machine learning using SGD. A momentum method updates a parameter value by using a gradient calculated in the latest learning step and a gradient calculated in a past learning step. In a case where a momentum method is used, SGD is modified so that a parameter update amount of a dimension in which the latest gradient and the past gradient are oriented in the same direction increases, and an update amount of a parameter value of a dimension in which the latest gradient and the past gradient are in different directions decreases.

As a technique for improving a learning efficiency of machine learning, for example, a machine learning device has been proposed in which machine learning is performed with a new neural network connected to a stage subsequent to an existing neural network that has already been learned.

[Citation List]

[Patent Literature]

Japanese Laid-open Patent Publication No. 2017-182320.

[Summary]

[Technical Problem]

In machine learning, as the number of repetitions of learning increases, a parameter update amount in one time of learning decreases. In learning a model having a plurality of layers such as a multi-layer neural network, the parameter update amount may differ depending on the respective layer. For example, in a case where some of the layers in the model are copies from an existing model, the copied layers have been sufficiently learned, and the parameter update amount in one time of learning decreases at an early stage. Thus, it is conceivable to lower a frequency of parameter update to reduce an amount of calculation for parameter update for layers in which a change in parameter is small.

However, in a case where a momentum method is applied as a method of machine learning, when parameter update processing for some of the layers has been skipped, it is not possible to obtain a past error gradient to be used for calculation of a parameter update amount of the corresponding layer in the next learning, and it is not possible to calculate the update amount. Thus, in machine learning to which a momentum method is applied, it is not possible to skip learning of some of the layers, and this makes it difficult to reduce the amount of calculation for the learning.

In one aspect, the embodiments are aimed at reducing the amount of calculation for machine learning.

[Solution to Problem]

According to an aspect of the embodiments, a learning program is executed by a computer. The learning program includes executing, in learning processing that is repeatedly executed for a model having a plurality of layers, update processing of a value of a parameter for at least one update suppression layer among the plurality of layers just once every k times (k is an integer of 2 or more) of the learning processing; and calculating, when the update processing of the value of the parameter for the update suppression layer is executed, a value of a first parameter after the update by a gradient descent method to which a momentum method is applied, by using a value of a second parameter calculated in the learning processing k times before and a value of a third parameter calculated in the learning processing 2k times before.

[Effect]

According to one aspect, the amount of calculation of machine learning is reduced.

[Brief Description of Drawings]

FIG. 1 illustrates an example of a learning method according to a first embodiment;
FIG. 2 illustrates an example of hardware of a learning device;
FIG. 3 illustrates an example of a structure of a model;
FIG. 4 illustrates an example of machine learning;
FIG. 5 illustrates an example of updating a weight in accordance with an error gradient;
FIG. 6 illustrates an example of a state in which weight update processing is implemented;
FIG. 7 illustrates an effect of applying a momentum method;
FIG. 8 illustrates a first example of a shift of a weight parameter value;
FIG. 9 illustrates a second example of a shift of a weight parameter value;
FIG. 10 illustrates a third example of a shift of a weight parameter value;
FIG. 11 illustrates a fourth example of a shift of a weight parameter value;
FIG. 12 illustrates a fifth example of a shift of a weight parameter value;
FIG. 13 is a block diagram illustrating an example of a function of the learning device;
FIG. 14 illustrates an example of a weight information storage unit;
FIG. 15 illustrates an example of a skip information storage unit;
FIG. 16 is a first half of a flowchart illustrating a procedure of learning processing; and
FIG. 17 is a latter half of the flowchart illustrating the procedure of the learning processing.

[Description of Embodiments]

Hereinafter, the present embodiment will be described with reference to the drawings. Note that each of the embodiments may be implemented in combination with at least one of the other embodiments as long as no contradiction arises.

[First embodiment]

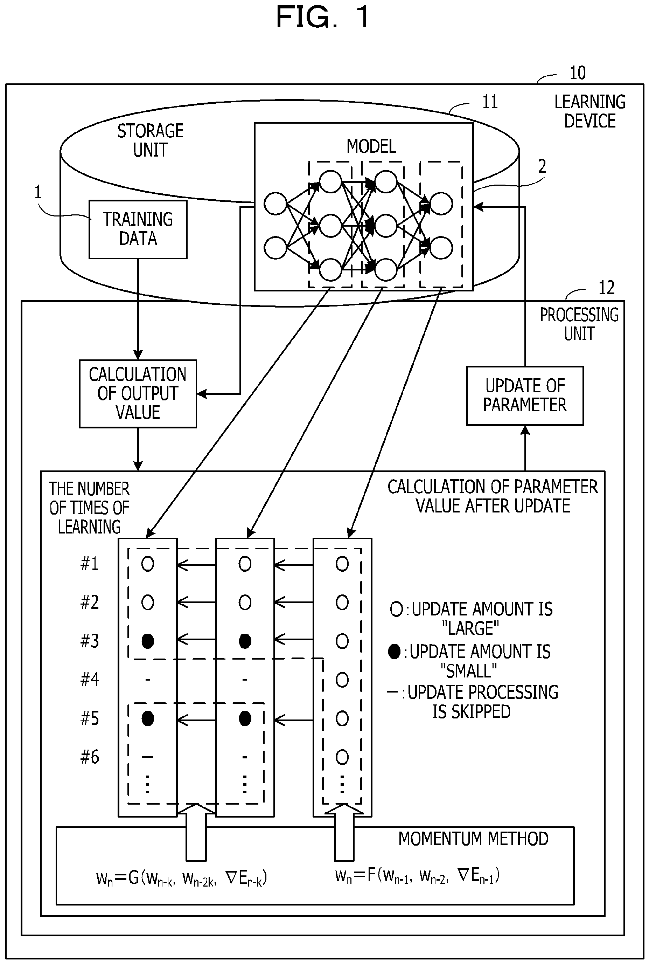

FIG. 1 illustrates an example of a learning method according to a first embodiment. FIG. 1 illustrates a learning device 10 that implements the learning method according to the first embodiment. The learning device 10 is, for example, a computer, and is capable of implementing the learning method according to the first embodiment by executing a learning program.
The learning device 10 includes a storage unit 11 and a processing unit 12. The storage unit 11 is, for example, a memory or a storage device included in the learning device 10. The processing unit 12 is, for example, a processor or an arithmetic circuit included in the learning device 10.
The storage unit 11 stores training data 1 and a model 2. The training data 1 is data used for the training of the model 2. The training data 1 includes input data for the model 2 and a label that indicates ground truth of a result of calculation in which the model 2 is used. The model 2 is divided into a plurality of layers. Each layer has one or more parameters. The model 2 is, for example, a multi-layer neural network. In that case, the parameters are weight parameters for data input to nodes in each layer.
The processing unit 12 repeatedly executes learning processing of the model 2 using the training data 1. For example, in a case where the input data indicated in the training data 1 is input to the model 2, the processing unit 12 searches for a parameter value that causes the label indicated in the training data 1 to be output as a calculation result.
For example, the processing unit 12 first uses the input data indicated in the training data 1 as an input to the model 2, and performs a calculation in accordance with the model 2 using a parameter value to calculate an output value. Next, the processing unit 12 compares the label indicated in the training data 1 with the output value, and calculates a parameter value after an update of the model 2. Then, the processing unit 12 updates the parameter value of the model 2 to the calculated parameter value.

Note that the processing unit 12 may set some of the plurality of layers included in the model 2 as update suppression layers. An update suppression layer suppresses a calculation of a parameter value after an update in learning and update processing of the parameter.

For example, every time learning processing is executed, the processing unit 12 determines, for each layer of the model 2, whether or not the layer is to be set as an update suppression layer. For example, the processing unit 12 calculates, for each of a plurality of layers, a difference between the parameter value before the update and the parameter value after the update in the previous parameter value update processing. Then, on the basis of the calculated difference, the processing unit 12 determines whether or not the corresponding layer is to be set as an update suppression layer.

For example, each layer may include a plurality of parameters. In this case, the processing unit 12 calculates a norm of a vector that includes, as an element, a difference between the value before the update and the value after the update in the previous parameter update processing for each of a plurality of parameter values in one layer. A norm is a generalized notion of a vector length. Then, in a case where the calculated norm is equal to or less than a predetermined threshold value, the processing unit 12 determines the one layer as the update suppression layer.

In the example of FIG. 1, whether or not a value (norm or the like) calculated on the basis of an update amount of a parameter value of each layer is larger than a threshold value is indicated by a circle for each number of times of learning (the number of times learning processing has been conducted). A white circle indicates that the value based on the update amount is larger than the threshold value. A black circle indicates that the value based on the update amount is equal to or less than the threshold value.

In the learning processing, the processing unit 12 executes parameter value update processing for the update suppression layer just once every k times (k is an integer of 2 or more) of the learning processing. k is the number of skips, and is set to a predetermined value in advance, for example. In the example of FIG. 1, k = 2 is set, and the parameter value update processing is skipped just once every two times of the learning processing.

The processing unit 12 calculates the value after the update of the parameter of each layer by a gradient descent method to which a momentum method is applied. Note that, for layers other than the update suppression layer, the processing unit 12 updates parameter values every time learning processing is performed, and it is therefore possible to apply a commonly used momentum method. For example, the processing unit 12 calculates the parameter value after the update by using the parameter value calculated in the learning processing one time before and the parameter value calculated in the learning processing two times before.

For example, in a case where the model 2 is a multi-layer neural network, the processing unit 12 calculates a weight parameter value. Here, a weight parameter value calculated in the learning processing one time before is expressed as $w_{n-1}$, and a weight parameter value calculated in the learning processing two times before is expressed as $w_{n-2}$. At this time, the processing unit 12 uses $w_{n-1}$ to calculate an error gradient $\nabla E_{n-1}$ in the learning processing one time before. Then, the processing unit 12 calculates a weight parameter value $w_n$ in the current learning processing by using a calculation formula $F(w_{n-1}, w_{n-2}, \nabla E_{n-1})$ of a gradient descent method to which a momentum method is applied, in which $w_{n-1}$, $w_{n-2}$, and $\nabla E_{n-1}$ are included as variables.

On the other hand, for the update suppression layer, the parameter value has not been updated in an immediately preceding predetermined number of times of the learning processing. Thus, it is not possible to apply a commonly used momentum method. Thus, in a case where the parameter value update processing is executed for the update suppression layer, the processing unit 12 calculates the parameter value after the update by using the parameter value calculated in the learning processing k times before and the parameter value calculated in the learning processing 2k times before.

For example, in a case where the model 2 is a multi-layer neural network, a weight parameter value calculated in the learning processing k times before is expressed as $w_{n-k}$, and a weight parameter value calculated in the learning processing 2k times before is expressed as $w_{n-2k}$. At this time, the processing unit 12 uses $w_{n-k}$ to calculate an error gradient $\nabla E_{n-k}$ in the learning processing k times before. Then, the processing unit 12 calculates a weight parameter value $w_n$ in the current learning processing by using a calculation formula $G(w_{n-k}, w_{n-2k}, \nabla E_{n-k})$ of a gradient descent method to which a momentum method is applied, in which $w_{n-k}$, $w_{n-2k}$, and $\nabla E_{n-k}$ are included as variables.

In this way, in a case where the parameter value update processing has been skipped, in the subsequent parameter value update processing, the processing unit 12 calculates the parameter value after the update by using a calculation formula in accordance with the number of skips. As a result, even in a case where the parameter value update processing has been skipped, the parameter value after the update may be calculated by a gradient descent method to which a momentum method is applied in the subsequent learning. For example, in machine learning to which a momentum method is applied, it is possible to reduce the amount of calculation by reducing the number of times of parameter value update processing for some of the layers.

Note that the processing unit 12 may also use an approximate value in calculating a parameter value after an update. For example, the processing unit 12 calculates a parameter value after an update by approximating an error gradient in the learning processing in which the parameter value update processing has not been executed to the same value as an error gradient in the learning processing in which the parameter value update processing has been executed. Performing the calculation using the error gradient in a case where the update processing has been skipped allows for more accurate calculation and efficient convergence of learning. As a result, the amount of calculation conducted before the end of learning is reduced.

Furthermore, an error caused by a parameter value that is supposed to be calculated in the learning processing in which the update processing is skipped being unknown may be corrected by, for example, multiplying a momentum term by an optional coefficient. For example, a calculation formula of a gradient descent method to which a momentum method is applied includes a momentum term that causes an influence of the momentum method to be reflected. Thus, in calculation of a parameter value of an update suppression layer, the processing unit 12 uses, as a momentum term, a term in which a difference between a parameter value calculated in the learning processing k times before and a parameter value calculated in the learning processing 2k times before is multiplied by a predetermined coefficient. As a result, an appropriate coefficient may be set, and thus an accurate calculation may be achieved.

Moreover, the processing unit 12 may determine whether or not a layer is to be set as an update suppression layer on the basis of, for example, a difference between the parameter value before the update and the parameter value after the update in the previous parameter value update processing. As a result, it is possible to set, as an update suppression layer, just a layer for which calculation by a momentum method may be performed even in a case where parameter value update processing is skipped. As a result, it is possible to set, as an update suppression layer, just a layer in which the update amount is small and skipping update processing does not adversely affect a convergence of the whole learning.

For example, in a case where a norm of a vector that includes, as an element, a difference in each of a plurality of parameters of a certain layer is equal to or less than a predetermined threshold value, the processing unit 12 may determine that layer as the update suppression layer, thereby appropriately determining a layer in which parameter update amounts are small.

[Second embodiment]

Next, a second embodiment will be described. The second embodiment enables, in machine learning that uses a gradient descent method (for example, SGD) to which a momentum method is applied, an improvement in processing efficiency obtained by skipping learning for some of layers in a multi-layer neural network.

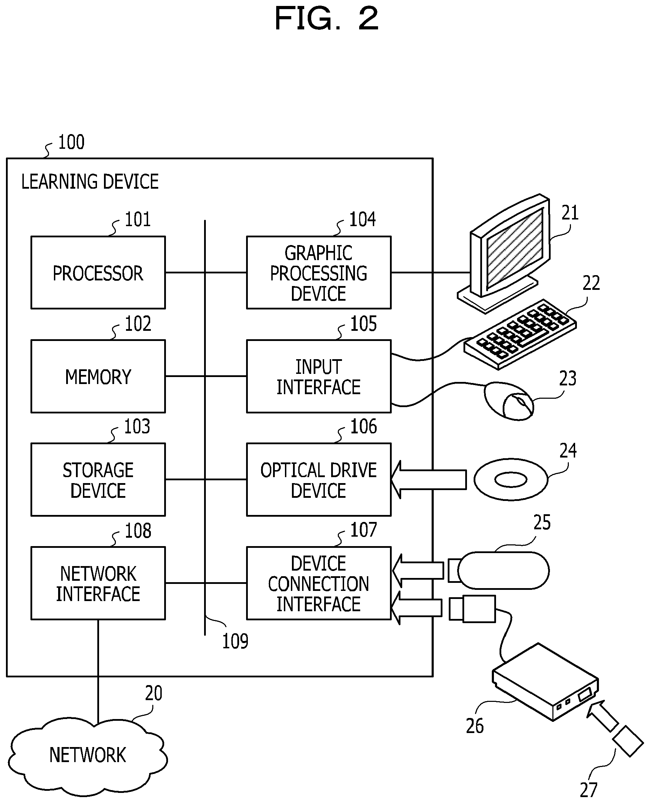

FIG. 2 illustrates an example of hardware of a learning device. The whole of a learning device 100 is controlled by a processor 101. The processor 101 is connected with, via a bus 109, a memory 102 and a plurality of peripheral devices. The processor 101 may be a multiprocessor. The processor 101 is, for example, a central processing unit (CPU), a micro processing unit (MPU), or a digital signal processor (DSP). At least one of functions implemented by execution of a program by the processor 101 may be implemented by an electronic circuit such as an application specific integrated circuit (ASIC) or a programmable logic device (PLD).

The memory 102 is used as a main storage device of the learning device 100. The memory 102 temporarily stores at least one of an operating system (OS) program or an application program to be executed by the processor 101. Furthermore, the memory 102 stores various types of data used in processing by the processor 101. As the memory 102, for example, a volatile semiconductor storage device such as a random access memory (RAM) is used.

The peripheral devices connected to the bus 109 include a storage device 103, a graphic processing device 104, an input interface 105, an optical drive device 106, a device connection interface 107, and a network interface 108.

The storage device 103 electrically or magnetically writes/reads data in/from a built-in recording medium. The storage device 103 is used as an auxiliary storage device of a computer. The storage device 103 stores an OS program, an application program, and various types of data. Note that, as the storage device 103, for example, a hard disk drive (HDD) or a solid state drive (SSD) may be used.

The graphic processing device 104 is connected with a monitor 21. The graphic processing device 104 displays an image on a screen of the monitor 21 in accordance with a command from the processor 101. Examples of the monitor 21 include a display device using an organic electro luminescence (EL), a liquid crystal display device, and the like.

The input interface 105 is connected with a keyboard 22 and a mouse 23. The input interface 105 transmits, to the processor 101, signals sent from the keyboard 22 and the mouse 23. Note that the mouse 23 is an example of a pointing device, and other pointing devices may also be used. The other pointing devices include a touch panel, a tablet, a touch pad, a track ball, and the like.

The optical drive device 106 uses laser light or the like to read data recorded on an optical disc 24 or write data to the optical disc 24. The optical disc 24 is a portable recording medium on which data is recorded so as to be readable by reflection of light. Examples of the optical disc 24 include a digital versatile disc (DVD), a DVD-RAM, a compact disc read only memory (CD-ROM), a CD-recordable (R)/rewritable (RW), and the like.

The device connection interface 107 is a communication interface for connecting the peripheral devices to the learning device 100. For example, the device connection interface 107 may be connected with a memory device 25 and a memory reader/writer 26. The memory device 25 is a recording medium equipped with a function for communication with the device connection interface 107. The memory reader/writer 26 is a device that writes data in a memory card 27 or reads data from the memory card 27. The memory card 27 is a card type recording medium.

The network interface 108 is connected to a network 20. The network interface 108 exchanges data with another computer or a communication device via the network 20. The network interface 108 is a wired communication interface that is connected to a wired communication device such as a switch or a router with a cable. Furthermore, the network interface 108 may be a wireless communication interface that is connected to and communicates with a wireless communication device such as a base station or an access point by radio waves.

The learning device 100 may implement a processing function according to the second embodiment with hardware as described above. Note that the learning device 10 described in the first embodiment may also be constituted by hardware similar to that of the learning device 100 illustrated in FIG. 2.

The learning device 100 implements the processing function of the second embodiment by executing, for example, a program recorded in a computer-readable recording medium. A program in which contents of processing to be executed by the learning device 100 are described may be recorded in various recording media. For example, a program to be executed by the learning device 100 may be stored in the storage device 103. The processor 101 loads at least one of programs in the storage device 103 on the memory 102 and executes the program. It is also possible to record the program to be executed by the learning device 100 in a portable recording medium such as the optical disc 24, the memory device 25, or the memory card 27. The program stored in the portable recording medium may be executed after being installed on the storage device 103, for example, by control of the processor 101. Furthermore, the processor 101 may also read the program directly from the portable recording medium and execute the program.

Next, a structure of a model learned by the learning device 100 will be described.

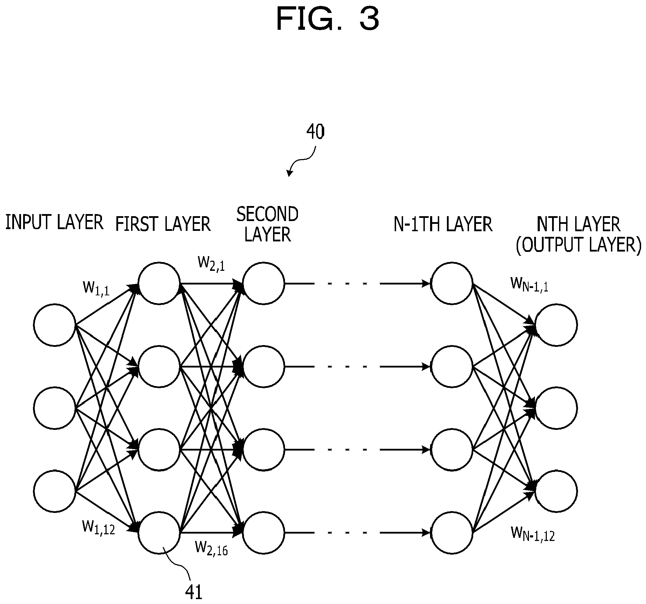

FIG. 3 illustrates an example of a structure of a model. A model 40 is a multi-layer neural network. By using a multi-layer neural network as the model 40, the learning device 100 may use deep learning as a machine learning algorithm. The model 40 illustrated in FIG. 3 is an N-layer (N is an integer of 1 or more) neural network.

The model 40 includes a plurality of nodes 41, each representing an artificial neuron. The plurality of nodes 41 are divided into a plurality of layers, and the layers include N layers in addition to an input layer. The first layer to the N-1th layer are hidden layers, and the Nth layer is an output layer.

Nodes in adjacent layers are connected by arrows indicating connection relationships. Between nodes connected by an arrow, data is transmitted in the direction of the arrow. In a neural network, data is transmitted from a node closer to the input layer to a node farther from the input layer.

Each arrow is given a weight parameter that indicates a strength of the connection between the nodes on both sides. For example, in the case of the model 40, the number of nodes in the input layer is "3" and the number of nodes in the first layer is "4", so a weight parameter group indicating the strength of the connection between the nodes in the input layer and the nodes in the first layer includes 12 weight parameters $w_{1,1}, ..., w_{1,12}$. In each layer, an output is calculated by weighting input data in accordance with the weight parameter of the data. A weight parameter group input to the nodes in each layer is hereinafter referred to as the weight parameter group of the layer. For example, a parameter group transmitted from the nodes in the input layer to the nodes in the first layer is the weight parameter group of the first layer.

In machine learning, the learning device 100 learns appropriate values of the weight parameter group for each of the first layer to the Nth layer.

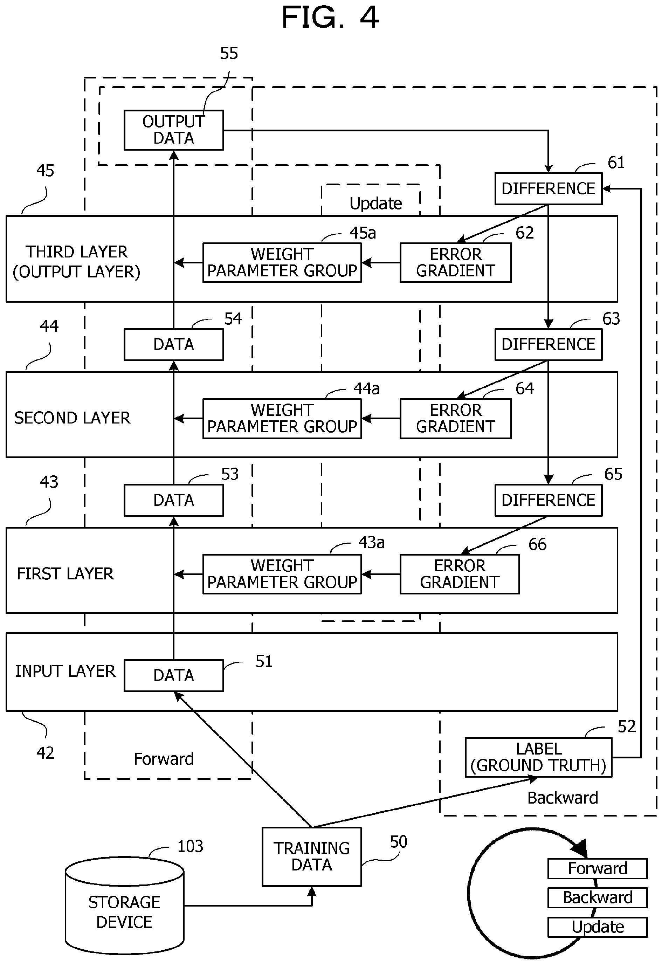

FIG. 4 illustrates an example of machine learning. The learning device 100 stores training data 50 in the storage device 103. The training data 50 includes data 51 to be input to the model 40 and a label 52 indicating ground truth of a learning result. The learning device 100 performs machine learning using the training data 50 to obtain appropriate weight parameter values of the model 40.

Learning the model 40 involves repeating a plurality of phases, including Forward, Backward and Update.

In the Forward phase, a value of an explanatory variable included in the training data 50 is input to a node in an input layer 42 of the model 40 as the data 51 for input. The input data 51 is transmitted from the node in the input layer 42 to a node in a first layer 43. In the first layer 43, a weight parameter group 43a of the first layer 43 is used to calculate an output value corresponding to the input data 51. Data 53 that includes the output value calculated in the first layer 43 is transmitted from the first layer 43 to a second layer 44.

In the second layer 44, a weight parameter group 44a of the second layer 44 is used to calculate an output value corresponding to the input data 53. Data 54 that includes the output value calculated in the second layer 44 is transmitted from the second layer 44 to a third layer 45.

In the third layer 45, a weight parameter group 45a of the third layer 45 is used to calculate an output value corresponding to the input data 54. A result of calculation in the third layer 45 is output as output data 55.

The above is the processing in the Forward phase. After the Forward phase, the Backward phase is executed.

In the Backward phase, a difference 61 between the output data 55 and the label 52 is calculated. Then, an error gradient 62 for each weight parameter of the third layer 45, which is the output layer, is calculated in accordance with the difference 61. Furthermore, based on the difference 61, a difference 63 between appropriate data to be input to the third layer 45 for obtaining ground truth and the actually input data 54 is calculated. Then, an error gradient 64 for each weight parameter of the second layer 44 is calculated in accordance with the difference 63. Moreover, based on the difference 63, a difference 65 between appropriate data to be input to the second layer 44 for obtaining ground truth and the actually input data 53 is calculated. Then, an error gradient 66 for each weight parameter of the first layer 43 is calculated in accordance with the difference 65.

The above is the processing in the Backward phase. The Update phase is executed based on the error gradients 62, 64, and 66 in Backward. In the Update phase, the weight parameter values are updated. For example, a weight parameter included in the weight parameter group 43a of the first layer 43 is updated in accordance with the error gradient 66 corresponding to the weight parameter. A weight parameter included in the weight parameter group 44a of the second layer 44 is updated in accordance with the error gradient 64 corresponding to the weight parameter. A weight parameter included in the weight parameter group 45a of the third layer 45 is updated in accordance with the error gradient 62 corresponding to the weight parameter.

The learning device 100 learns appropriate weight parameter values of the model 40 by repeatedly executing such machine learning.

An error gradient is reflected in a weight by converting the error gradient into a subtraction value so as to mitigate an influence of current input data and subtracting the subtraction value from the current weight, instead of subtracting the error gradient itself from the current weight. At that time, a learning rate, which is one of hyperparameters, is used. The larger the learning rate is, the more strongly the influence of the latest input data is reflected in the weight. The smaller the learning rate is, the less strongly the influence of the latest input data is reflected in the weight.

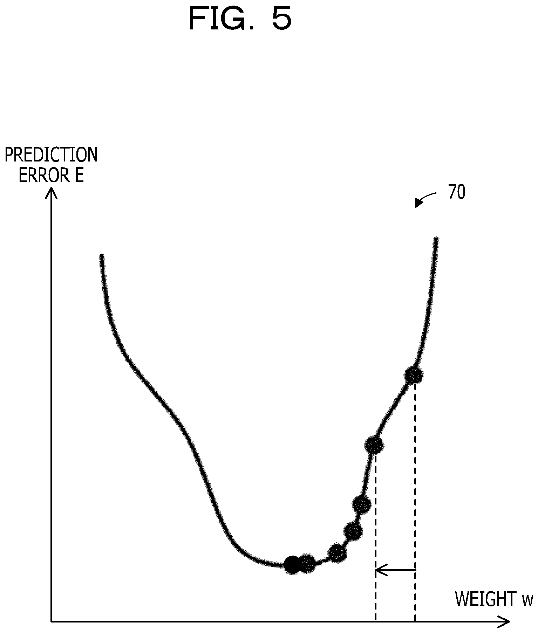

FIG. 5 illustrates an example of updating a weight in accordance with an error gradient. A prediction error E of a neural network may be regarded as a function of a weight value w, as shown in a graph 70. In backpropagation, a search for the weight value w that minimizes the prediction error E is conducted. In accordance with the error gradient of the prediction error E at the current weight value w, the weight value w changes in a direction opposite to the error gradient. In a case where the error gradient is positive, the weight value w decreases. In a case where the error gradient is negative, the weight value w increases.

The larger the error gradient, the larger the update amount of the weight parameter (weight update amount) per update. As the prediction error E is closer to the minimum, the error gradient becomes gentle and the weight update amount decreases. Note that the weight update amount in accordance with the error gradient is adjusted by a learning rate, which is a real number of "0" or more.

How close the weight parameter for each layer in the neural network is to the minimum value differs depending on the layer. Thus, the weight update amount also differs depending on the respective layer. Thus, it is conceivable to skip, for a layer in which the weight update amount per update has become sufficiently small, the calculation of the error gradient and the weight parameter update processing.

For example, in a case of a layer closer to the input layer, a model that has already been learned (existing model) may be used as a neural network to be learned, and a new layer (new model) may be added after the existing model. For example, the learning device 100 generates a handwritten character recognition model specialized for handwritten character recognition by connecting a new model to a stage subsequent to a learned general-purpose image recognition model.

When machine learning of a model in which an existing model and a new model are combined in this way is implemented, the weight update amount per one time of learning processing (iteration), which is repeatedly executed, becomes very small for layers in the existing model section. In a case where it is known that the weight update amount is small, a frequency of update of a weight parameter value may be set to, for example, about once every several times of the learning processing, so that the processing efficiency may be improved.

For example, on the basis of an Lp norm of a vector (weight update amount vector Δw) that includes, as an element, an update amount of each weight parameter value included in a weight parameter group of a layer, the learning device 100 may determine whether or not weight update processing of the corresponding layer is to be implemented. For example, the learning device 100 performs weight update processing just once every several times of the learning processing for a layer in which the Lp norm is equal to or less than a predetermined threshold value T. Details of the Lp norm will be described later.

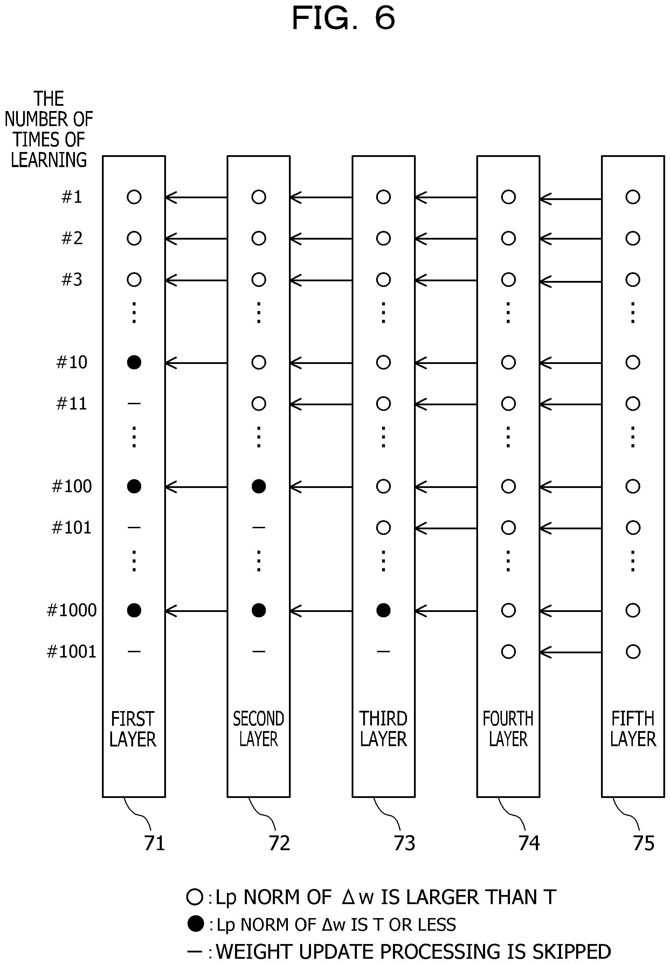

FIG. 6 illustrates an example of a state in which weight update processing is implemented. For example, it is assumed that machine learning is performed on a model including a first layer 71 to a fifth layer 75. In the example of FIG. 6, for each number of times of learning (numerical value indicating the number of times learning has been conducted), the layers that have undergone weight update processing in the learning are indicated by circles. In a case where the Lp norm of the weight update amount in the weight update processing is larger than T, a white circle is put. On the other hand, in a case where the Lp norm of the weight update amount in the weight update processing is T or less, a black circle is put. "-" Indicates that the weight update processing for the corresponding layer has been skipped.

In a case where a layer close to the input layer is a copy from an existing model, the closer the layer is to the input layer, the earlier the Lp norm of Δw reaches T or less. In a layer in which the Lp norm of Δw has reached T or less, the weight update processing is skipped in the subsequent predetermined number of times of learning.

Next, a momentum method will be described. A momentum method improves a processing efficiency in a gradient descent method. In a gradient descent method to which a momentum method is not applied, a weight parameter value $w_{n+1}$ used in the n+1th learning is expressed by the following equation.

[Equation 1]

$$w_{n+1} = w_n - \eta \frac{\partial L_n}{\partial w_n} \qquad (1)$$

$w_n$ is a weight parameter value used in the n-th learning. $\eta$ is a learning rate. $L_n$ is a loss function. $\partial L_n / \partial w_n$ is an error gradient ∇E. In a case where a momentum method is applied, the weight parameter value $w_{n+1}$ is calculated by the following equations.

[Equation 2]

$$v_n = \alpha v_{n-1} - \eta \frac{\partial L_n}{\partial w_n} \qquad (2)$$

[Equation 3]

$$w_{n+1} = w_n + v_n \qquad (3)$$

$\alpha$ is a momentum coefficient, $\alpha$ is, for example, an integer of about "0.9". The following formulas may be derived based on Equation (2) and Equation (3).

[Equation 4]

$$v_n = w_{n+1} - w_n \qquad (4)$$

[Equation 5]

$$w_{n+1} = w_n + \alpha v_{n-1} - \eta \frac{\partial L_n}{\partial w_n}$$

$$= w_n + \alpha(w_n - w_{n-1}) - \eta \frac{\partial L_n}{\partial w_n} \qquad (5)$$

From Equation (5), a new weight parameter value $w_{n+1}$ is obtained by adding, to the previous weight parameter value $w_n$, a value obtained by multiplying "$w_n - w_{n-1}$" by the momentum coefficient $\alpha$ and then subtracting a value obtained by multiplying the error gradient ∇E by the learning rate $\eta$. The second term on the right-hand side of Equation (5) is a momentum term.

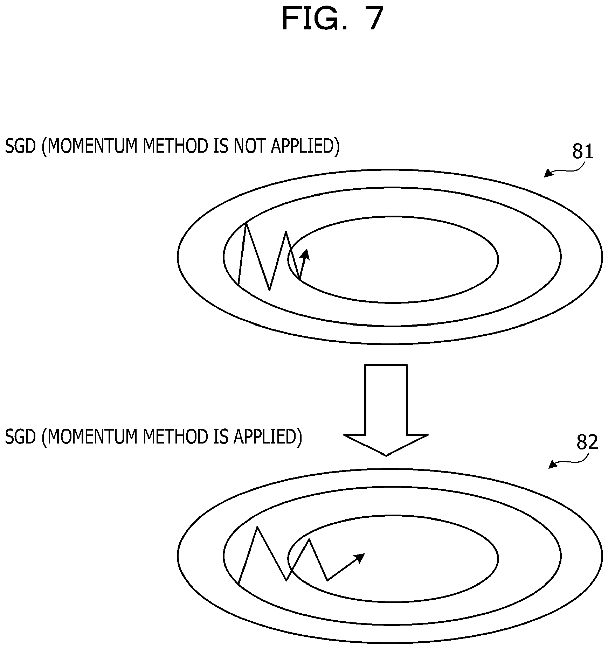

FIG. 7 illustrates an effect of applying a momentum method. FIG. 7 illustrates a schematic diagram 81 illustrating a process of updating a weight parameter by a gradient descent method to which a momentum method is not applied, and a schematic diagram 82 illustrating a process of updating a weight parameter by a gradient descent method to which a momentum method is applied. Ellipses in the schematic diagrams 81 and 82 indicate that the loss function has a larger gradient in one dimension (in a vertical direction) than in the other dimension (in a horizontal direction). Furthermore, the centers of the ellipses are parameter positions where the value of the loss function is minimized. A transition of the weight parameter value for each learning is represented by a polygonal arrow.

In a gradient descent method to which a momentum method is not applied, the weight parameter value repeatedly reciprocates at the periphery of the valley bottom where the value is directed toward a local optimum value, and it takes time to achieve the direction in which the loss function is minimized. On the other hand, in a case where a momentum method is applied, the weight parameter update amount increases in the dimension (in the horizontal direction in the drawing) in which the latest gradient and a past gradient are oriented in the same direction. As a result, a change in the weight parameter value is accelerated in the direction in which the value of the loss function is minimized, and the learning result converges efficiently.

Here, in a case of a gradient descent method to which a momentum method is applied, skipping weight update processing as illustrated in FIG. 6 causes a problem as described below.

When weight update processing is skipped in certain learning processing, the weight parameter value is not updated and is the same as the weight parameter value in the previous learning processing. Then, the value of "$w_n$ - $w_{n-1}$" shown in Equation (5) becomes "0". Thus, using Equation (5) as it is cancels the effect of the momentum term.

Thus, for example, in a case of skipping k times (k is an integer of 1 or more), it is conceivable to replace "$w_n$ - $w_{n-1}$" in Equation (5) with "$w_n$ - $w_{n-k}$". As a result, the momentum term does not become "0", and the effect of applying the momentum method is exerted. Here, skipping k times means that, in a case of k = 1, the weight update processing is performed without being skipped, and in a case of k = 2, the weight update processing is skipped once while the learning processing is executed two times.

A equation in which skipping of the weight update processing is taken into consideration is as follows.
[Equation 6]

$$w_{n+k} = w_n + \alpha(w_n - w_{n-k}) - \eta \frac{\partial L_n}{\partial w_n} \qquad (6)$$

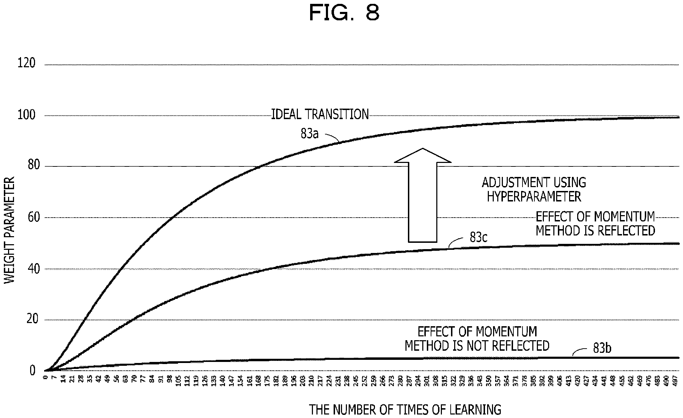

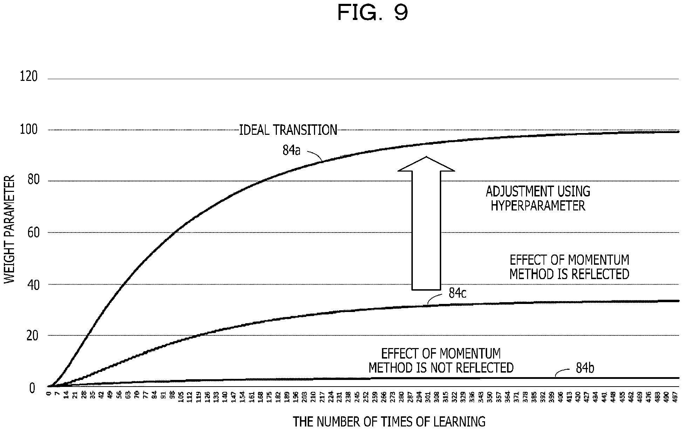

A shift of a weight parameter value in a case where the weight parameter is updated based on Equation (6) will be described below with reference to FIGs. 8 and 9. Note that an error gradient $\nabla E_n = \partial L_n / \partial w_n$, where n is the number of times of learning, is consistently a negative value, and is gradually reduced from an initial value "-1" by multiplying the previous value by "0.99". For example, "$\nabla E_n = (-1) \times (0.99)^n$". Since learning is skipped in a case where the fluctuation of the weight parameter value is small, it is assumed that $\nabla E_n$ does not fluctuate. Furthermore, it is assumed that the learning rate is set to $\eta = 0.1$, the momentum coefficient is set to $\alpha = 0.9$, and the initial values are set to $w_0 = 0$ and $v_{-1} = 0$.

FIG. 8 illustrates a first example of a shift of a weight parameter value. The example of FIG. 8 indicates a transition of the weight parameter value in a case where the number of skips of the weight update processing is k = 2 (skipping once every two times). A curve 83a indicates an ideal transition of the weight parameter value. A curve 83b indicates a transition of the weight parameter value in a case where learning is performed by Equation (5) without the effect of the momentum term being reflected. A curve 83c indicates a transition of the weight parameter value in a case where learning is performed by Equation (6) with the effect of the momentum term being reflected.

FIG. 9 illustrates a second example of a shift of a weight parameter value. The example of FIG. 9 indicates a transition of the weight parameter value in a case where the number of skips of the weight update processing is k = 3 (skipping once every three times). A curve 84a indicates an ideal transition of the weight parameter value. A curve 84b indicates a transition of the weight parameter value in a case where learning is performed by Equation (5) without the effect of the momentum term being reflected. A curve 84c indicates a transition of the weight parameter value in a case where learning is performed by Equation (6) with the effect of the momentum term being reflected.

As can be seen in FIGs. 8 and 9, applying Equation (6) causes the effect of the momentum method to be exerted and the transition state to get closer to an ideal state. However, with Equation (6) as it is, the curves 83c and 84c, which represent cases where Equation (6) is applied, deviate from the ideal curves 83a and 84a. The degree of deviation increases as the number of skips k increases.

Thus, the learning device 100 multiplies, for example, the momentum term of Equation (6) by a coefficient that is a hyperparameter and has a value larger than 1. As a result, the transition of the weight parameter value may be adjusted to get closer to an ideal transition.

Note that setting a wrong value for a hyperparameter in machine learning makes it difficult to improve an accuracy of inference by the model. It is therefore preferable to decrease the number of hyperparameters set at the time of learning.

Thus, the learning device 100 obtains a past weight parameter value to be used in a momentum method by an approximate expression to increase the degree of reflection of the effect of the momentum method. A procedure for deriving the approximate expression will be described below.

First, $\nabla E_n = (\partial L_n)/(\partial w_n)$ is set, in which $w_0$ is a constant, and v-i is set to "0" because v-i is not included. In this case, $v_0$ and $w_1$ are expressed by the following equation s.
[Equation 7]

$$v_0 = -\eta \nabla E_0 \qquad (7)$$

[Equation 8]

$$w_1 = w_0 + v_0 = w_0 - \eta \nabla \mathrm{E}_0 \qquad (8)$$

Based on Equation (7) and Equation (8), $v_1$ and $_{w2}$ may be calculated by the following formulas.
[Equation 9]

$$v_1 = \alpha v_0 - \eta \nabla E_1 = -\eta(\alpha \nabla E_0 + \nabla E_1) \qquad (9)$$

[Equation 10]

$$w_2 = w_1 + v_1 = w_0 - \eta \nabla \mathrm{E}_0 - \eta(\alpha \nabla E_0 + \nabla E_1)$$
$$= w_0 - \eta\{(1 + \alpha)\nabla \mathrm{E}_0 + \nabla E_1\} \qquad (10)$$

Moreover, based on Equation (9) and Equation (10), $v_2$ and $w_3$ may be calculated by the following equations.
[Equation 11]

$$v_2 = \alpha v_1 - \eta \nabla E_2 = -\eta(\alpha^2 \nabla E_0 + \alpha \nabla E_1 + \nabla E_2) \qquad (11)$$

[Equation 12]

$$w_3 = w_2 + v_2 = w_0 - \eta\{(1 + \alpha)\nabla \mathrm{E}_0 + \nabla E_1\} - \eta(\alpha^2 \nabla E_0 + \alpha \nabla E_1 + \nabla E_2)$$
$$= w_0 - \eta\{(1 + \alpha + \alpha^2)\nabla \mathrm{E}_0 + (1 + \alpha)\nabla E_1 + \nabla E_2\} \qquad (12)$$

Through sequential calculation as described above, $v_{n-1}$ and $w_n$ may be expressed as follows.
[Equation 13]

$$v_{n-1} = -\eta(\alpha^n \nabla E_0 + \alpha^{n-1} \nabla E_1 + \cdots + \alpha \nabla E_{n-1} + \nabla E_n) \qquad (13)$$

[Equation 14]

$$w_n = w_0 - \eta\{(1 + \alpha + \alpha^2 + \cdots + \alpha^{n-1})\nabla E_0 + (1 + \alpha + \cdots +$$
$$\alpha^{n-2})\nabla E_1 + \cdots + (1 + \alpha)\nabla E_{n-2} + \nabla E_{n-1}\} \qquad (14)$$

Here, a consideration is given to a case where the number of skips is k = 2 (skipping once every two times). It is assumed that $w_0$ is a constant and $w_1$ and $w_2$ are calculated without being skipped. Then, a case is assumed in which $w_4$ is obtained by approximate calculation when the calculation of the weight value of $w_3$ has been skipped. In this case, $w_1$ is expressed by Equation (8), and $w_2$ is expressed by Equation (10). The calculation of $w_3$ has been skipped, and $w_4$ may be calculated by the following formula based on generalized Equation (14).
[Equation 15]

$$w_4 = w_0 - \eta\{(1 + \alpha + \alpha^2 + \alpha^3)\nabla E_0 + (1 + \alpha + \alpha^2)\nabla E_1 + (1 + \alpha)\nabla E_2 + \nabla E_3\}$$
$$(15)$$

$\nabla E_2$ in Equation (15) may be obtained from $w_2$. $\nabla E_3$ may not obtained because $w_3$ has been skipped.
Here, each of $w_2 - w_0$ and $w_4 - w_2$ is calculated as follows.

[Equation 16]

$$w_2 - w_0 = -\eta\{(1 + \alpha)\nabla E_0 + \nabla E_1\} \qquad (16)$$

[Equation 17]

$$
\begin{aligned}
w_4 - w_2 &= -\eta\{(\alpha^2 + \alpha^3)\nabla E_0 + (\alpha + \alpha^2)\nabla E_1 + (1 + \alpha)\nabla E_2 + \nabla E_3\} \\
&= -\eta\{(\alpha^2 + \alpha^3)\nabla E_0 + \alpha^2\nabla E_1\} - \eta\{\alpha\nabla E_1 + (1 + \alpha)\nabla E_2 + \nabla E_3\} \\
&= -\eta\alpha^2\{(1 + \alpha)\nabla E_0 + \nabla E_1\} - \eta\{\alpha\nabla E_1 + (1 + \alpha)\nabla E_2 + \nabla E_3\} \\
&= \alpha^2(w_2 - w_0) - \eta\{\alpha\nabla E_1 + (1 + \alpha)\nabla E_2 + \nabla E_3\}
\end{aligned}
$$

$$(17)$$

Therefore, $w_4$ is expressed by the following equation.
[Equation 18]

$$w_4 = w_2 + \alpha^2(w_2 - w_0) - \eta\{\alpha\nabla E_1 + (1 + \alpha)\nabla E_2 + \nabla E_3\} \qquad (18)$$

Here, since skipping is basically caused by the learning amount being small, it is assumed that $\nabla E_1 \approx \nabla E_2 \approx \nabla E_3$. Then, Formula (18) may be approximated as follows.
[Equation 19]

$$w_4 \sim w_2 + \alpha^2(w_2 - w_0) - \eta\{\alpha\nabla E_2 + (1 + \alpha)\nabla E_2 + \nabla E_2\}$$

$$= w_2 + \alpha^2(w_2 - w_0) - 2\eta(1 + \alpha)\nabla E_2 \qquad (19)$$

Therefore, $w_4$ may be approximated with use of $w_2$ two times before, $w_0$ four times before, and $\nabla E_2$. When the approximation in a case where the number of skips is k = 2 is expressed in a commonly used form, the following equation is obtained.
[Equation 20]

$$w_n \sim w_{n-2} + \alpha^2(w_{n-2} - w_{n-4}) - 2\eta(1 + \alpha)\nabla E_{n-2} \qquad (20)$$

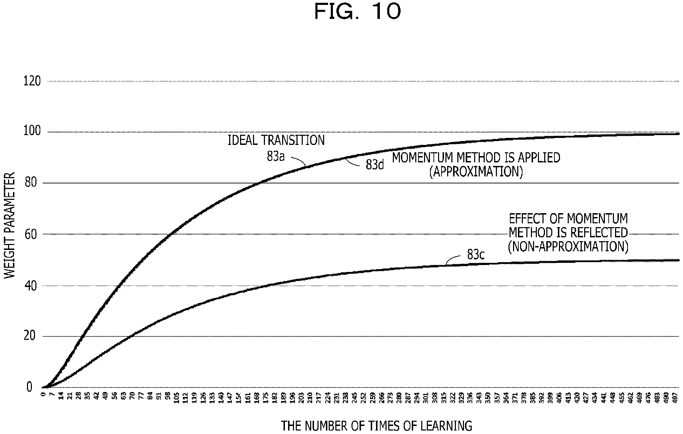

When Equation (20) is used to represent a curve of the weight parameter value under conditions similar to those of the graph illustrated in FIG. 8, a graph illustrated in FIG. 10 is obtained.
FIG. 10 illustrates a third example of a shift of a weight parameter value. The example of FIG. 10 indicates a transition of the weight parameter value calculated by using an approximate expression in a case where the number of skips of the weight update processing is k = 2 (skipping once every two times). A curve 83d indicates a transition of the weight parameter value in a case where the approximate calculation is performed by Equation (20). The curve 83d almost coincides with the curve 83a, which represents an ideal transition.
In this way, by performing the approximation using Equation (20), the weight parameter value may be calculated with high accuracy even in a case where the weight update processing has been skipped once every two times of the learning processing.
Next, the approximate calculation in a case where the number of skips is k = 3 will be described. As in the case where the number of skips is k = 2, $w_0$ is a constant. It is assumed that $w_1$, $w_2$ and $w_3$ are calculated without being skipped. Then, a case is assumed in which $w_6$ is obtained by approximate calculation when the calculation of the weight update processing for $w_4$ and $w_5$ has been skipped. In this case, $w_1$ is expressed by Equation (8), $w_2$ is expressed by Equation (10), and $w_3$ is expressed by Equation (12). The calculations for $w_4$ and $w_5$ are skipped. Based on generalized Equation (14), $w_6$ may be calculated by the following equation.
[Equation 21]

$$w_6 = w_0 - \eta\{(1 + \alpha + \alpha^2 + \alpha^3 + \alpha^4 + \alpha^5)\nabla E_0 + (1 + \alpha + \alpha^2 + \alpha^3 + \alpha^4)\nabla E_1$$
$$+ (1 + \alpha + \alpha^2 + \alpha^3)\nabla E_2 + (1 + \alpha + \alpha^2)\nabla E_3 + (1 + \alpha)\nabla E_4 + \nabla E_5\}$$

$$(21)$$

$\nabla E_3$ in Equation (21) may be obtained from $w_3$. $\nabla E_4$ and $\nabla E_5$ are not obtained because $w_4$ and $w_5$ have been skipped.

Here, each of $w_3$ - $w_0$ and $w_6$ - $w_3$ are calculated as follows.

[Equation 22]

$$w_3 - w_0 = -\eta\{(1 + \alpha + \alpha^2)\nabla E_0 + (1 + \alpha)\nabla E_1 + \nabla E_2\} \quad (22)$$

[Equation 23]

$$w_6 - w_3 =$$
$$-\eta\left\{\begin{array}{c}(\alpha^3 + \alpha^4 + \alpha^5)\nabla E_0 + (\alpha^2 + \alpha^3 + \alpha^4)\nabla E_1 + (\alpha + \alpha^2 + \alpha^3)\nabla E_2 \\ +(1 + \alpha + \alpha^2)\nabla E_3 + (1 + \alpha)\nabla E_4 + \nabla E_5\end{array}\right\}$$
$$= -\eta\{(\alpha^3 + \alpha^4 + \alpha^5)\nabla E_0 + (\alpha^3 + \alpha^4)\nabla E_1 + \alpha^3\nabla E_2\}$$
$$-\eta\{\alpha^2\nabla E_1 + (\alpha + \alpha^2)\nabla E_2 + (1 + \alpha + \alpha^2)\nabla E_3 + (1 + \alpha)\nabla E_4 + \nabla E_5\}$$
$$= -\eta\alpha^3\{w_3 - w_0\} - \eta\{\alpha^2\nabla E_1 + (\alpha + \alpha^2)\nabla E_2 + (1 + \alpha + \alpha^2)\nabla E_3 + (1 + \alpha)\nabla E_4 + \nabla E_5\}$$

$$(23)$$

Therefore, $w_6$ is expressed by the following equation .

[Equation 24]

$$w_6 = w_3 + \alpha^3(w_3 - w_0)$$
$$-\eta\{\alpha^2\nabla E_1 + (\alpha + \alpha^2)\nabla E_2 + (1 + \alpha + \alpha^2)\nabla E_3 + (1 + \alpha)\nabla E_4 + \nabla E_5\}$$

$$(24)$$

Here, since skipping is basically caused by the learning amount being small, it is assumed that $\nabla E_1 \approx \nabla E_2 \approx \nabla E_3 \approx \nabla E_4 \approx \nabla E_5$. Then, Equation (24) may be approximated as follows.

[Equation 25]

$$w_6 \sim w_3 + \alpha^3(w_3 - w_0)$$
$$-\eta\{\alpha^2\nabla E_3 + (\alpha + \alpha^2)\nabla E_3 + (1 + \alpha + \alpha^2)\nabla E_3 + (1 + \alpha)\nabla E_3 + \nabla E_3\}$$

$$= w_3 + \alpha^3(w_3 - w_0) - 3\eta(1 + \alpha + \alpha^2)\nabla E_3 \quad (25)$$

Therefore, $w_6$ may be approximated with use of $w_3$ three times before, $w_0$ six times before, and $\nabla E_3$. When the approximation in a case where the number of skips is k = 3 is expressed in a commonly used form, the following equation is obtained.

[Equation 26]

$$w_n \sim w_{n-3} + \alpha^3(w_{n-3} - w_{n-6}) - 3\eta(1 + \alpha + \alpha^2)\nabla E_{n-3} \quad (26)$$

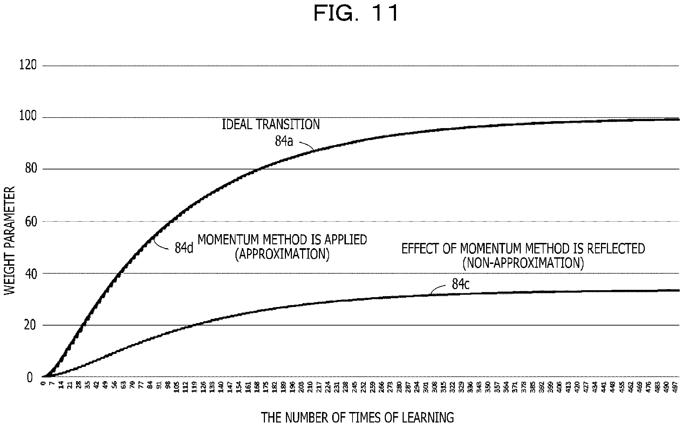

When Equation (26) is used to represent a curve of the weight parameter value under conditions similar to those of the graph illustrated in FIG. 9, a graph illustrated in FIG. 11 is obtained.

FIG. 11 illustrates a fourth example of a shift of a weight parameter value. The example of FIG. 11 indicates a transition of the weight parameter value calculated by using an approximate expression in a case where the number of skips of the weight update processing is k = 3 (skipping once every three times). A curve 84d indicates a transition of the weight parameter value in a case where the approximate calculation is performed by Equation (26). The curve 84d almost coincides with the curve 84a, which represents an ideal transition.

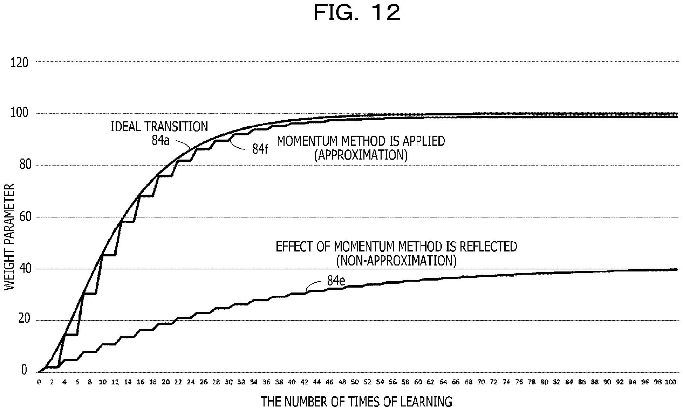

Note that, in the example of FIG. 11, the error gradient $\nabla E_n = \partial L_n / \partial w_n$, where n is the number of times of learning, is gradually reduced from an initial value "-1" by multiplying the previous value by "0.99". This indicates that in a case where the change in the error gradient $\nabla E_n$ between the previous learning and the current learning is small, the curve in a case where the approximate calculation is performed almost coincides with the ideal curve. An example of a case in which the absolute value of the error gradient $\nabla E_n$ shows a stronger tendency to decrease is illustrated in FIG. 12.

FIG. 12 illustrates a fifth example of a shift of a weight parameter value. The example of FIG. 12 indicates a transition of the weight parameter value calculated by using an approximate expression in a case where the number of skips of the weight update processing is k = 3 (skipping once every three times) and "$\nabla E_n = (-1) \times (0.80)^n$" is set. A curve 84e indicates a transition of the weight parameter value in a case where learning is performed by Equation (6) with the effect of the momentum term being reflected. A curve 84f indicates a transition of the weight parameter value in a case where the approximate calculation is performed by Equation (26). The curve 84f is shifted downward from the curve 84a representing an ideal transition, but is nevertheless close to the ideal curve.

Next, an approximate expression applicable in a case where the number of skips k is an optional integer will be described. In a similar manner to the approach described above, $w_n$ may be approximated with use of $w_{n-k}$ k times before, $w_{n-2k}$ 2k times before, and $\nabla E_{n-k}$. An approximate expression in a case where the number of skips is optional k is expressed by the following equation.

[Equation 27]

$$w_n \sim w_{n-k} + \alpha^k(w_{n-k} - w_{n-2k}) - k\eta(1 + \alpha + \alpha^2 + \cdots + \alpha^{k-1})\nabla E_{n-k}$$

$$(27)$$

Equation (27) may be transformed as follows using a equation for the sum of a geometric series.

[Equation 28]

$$w_n \sim w_{n-k} + \alpha^k(w_{n-k} - w_{n-2k}) - \frac{k\eta(1-\alpha^k)}{1-\alpha}\nabla E_{n-k} \qquad (28)$$

In this way, $w_n$ may be obtained by approximate calculation from $w_{n-k}$, $w_{n-2k}$, and $\nabla E_{n-k}$ using Equation (28) even in a case where the number of skips k is an optional value. Furthermore, in a case where $\alpha = 0$, it is possible to approximate a gradient descent method to which a momentum method is not applied.

Next, a function of the learning device 100 for performing machine learning in which skipping of weight update processing and a momentum method are combined will be described.

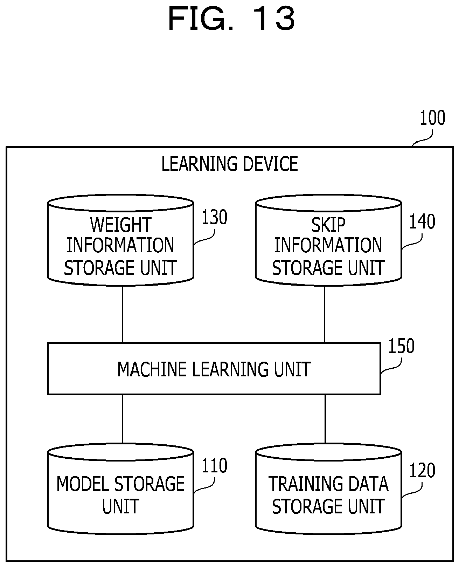

FIG. 13 is a block diagram illustrating an example of the function of the learning device. The learning device 100 includes a model storage unit 110, a training data storage unit 120, a weight information storage unit 130, a skip information storage unit 140, and a machine learning unit 150. The model storage unit 110, the training data storage unit 120, the weight information storage unit 130, and the skip information storage unit 140 are constituted by using a part of a storage area of the memory 102 or the storage device 103 included in the learning device 100. The machine learning unit 150 may be achieved by, for example, causing the processor 101 to execute a program in which a machine learning processing procedure is described.

The model storage unit 110 stores a model to be learned by the current deep learning. The model is a multi-layer neural network as illustrated in FIG. 3. The model to be learned is stored in the model storage unit 110 in advance, and weight parameters of the model are updated by learning by the machine learning unit 150.

The training data storage unit 120 stores training data used for the current deep learning. The training data includes a plurality of records in each of which a value of an explanatory variable and a ground truth label are associated with each other.

The weight information storage unit 130 stores, every time one cycle of learning is executed, each weight parameter value calculated in the learning. The stored weight parameter values are used to calculate a weight parameter value by a momentum method.

The skip information storage unit 140 stores, for each layer, information related to whether or not to skip the weight update processing for the layer. In backward processing in learning, an update of a weight parameter group is suppressed for a layer indicated by skip information as a layer to be skipped.

The machine learning unit 150 learns an appropriate weight parameter value of the model stored in the model storage unit 110 by using the training data stored in the training data storage unit 120. In learning, in a case of a layer in which the update amount of the weight parameter value is small, the machine learning unit 150 performs the weight update processing just once every number of times of learning indicated by the number of skips. For example, in a case of a layer in which the number of skips is set to 2, the machine learning unit 150 performs the weight update processing of the corresponding layer just once every two times of the learning processing. Furthermore, the machine learning unit 150 uses a momentum method to perform the weight update processing. For the current weight update processing of a layer for which the weight update processing has been skipped in the previous learning, Equation (28) is used to calculate a new value of the weight parameter.

Next, data stored in the weight information storage unit 130 and the skip information storage unit 140 will be specifically described.

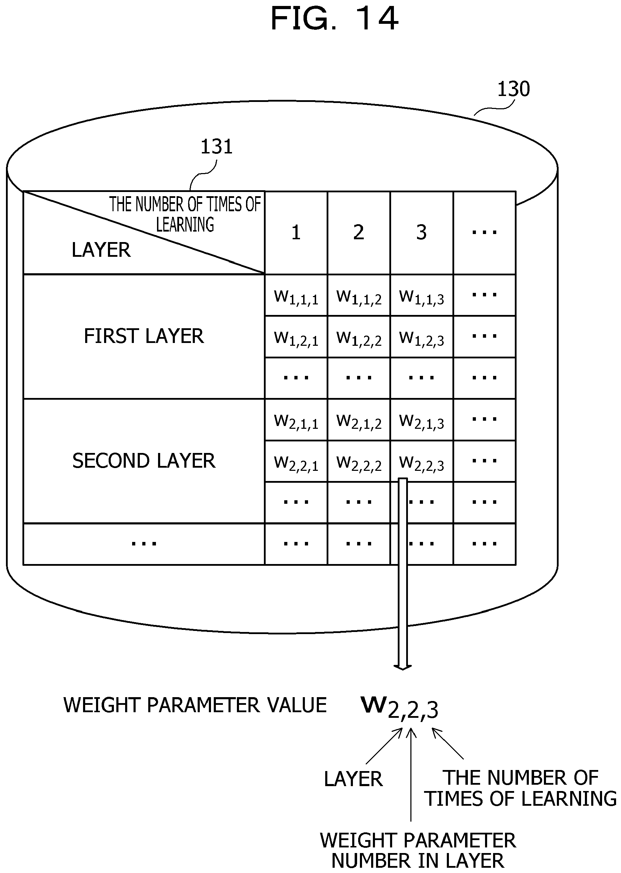

FIG. 14 illustrates an example of the weight information storage unit. The weight information storage unit 130 stores, for example, a weight management table 131. In the weight management table 131, weight parameter values obtained by learning are set for each layer. The weight parameter values are set in association with the number of times of learning. Each of the weight parameter values is a value at the end of learning of the corresponding number of times of learning. In the example of FIG. 14, three numerical values are added as subscripts to a weight parameter value w. The first numerical value indicates the layer number, the second numerical value indicates the weight parameter number in the layer, and the third numerical value indicates the number of times of learning.

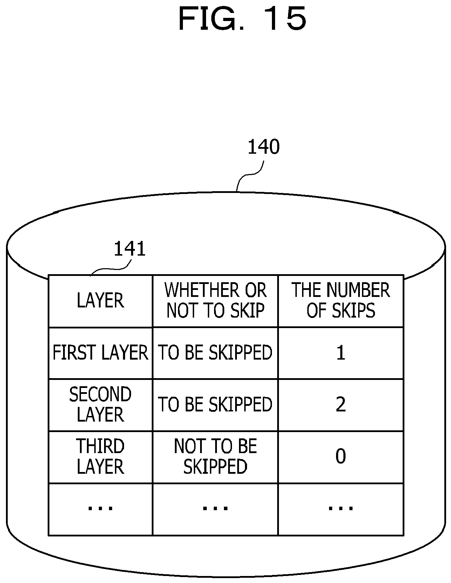

FIG. 15 illustrates an example of the skip information storage unit. The skip information storage unit 140 stores, for example, a skip management table 141. In the skip management table 141, whether or not to skip and the number of skips are set for each layer. Whether or not to skip is information indicating whether or not the weight update processing for the corresponding layer is to be skipped. In a case where the weight update processing is to be skipped, "to be skipped" is set, and in a case where the weight update processing is not to be skipped, "not to be skipped" is set. The initial value of whether or not to skip is "not to be skipped". The number of skips is the number of times in a row the weight update processing has been skipped for the corresponding layer. The initial value of the number of skips is "0".

The machine learning unit 150 uses the weight information storage unit 130 and the skip information storage unit 140 to learn the model.

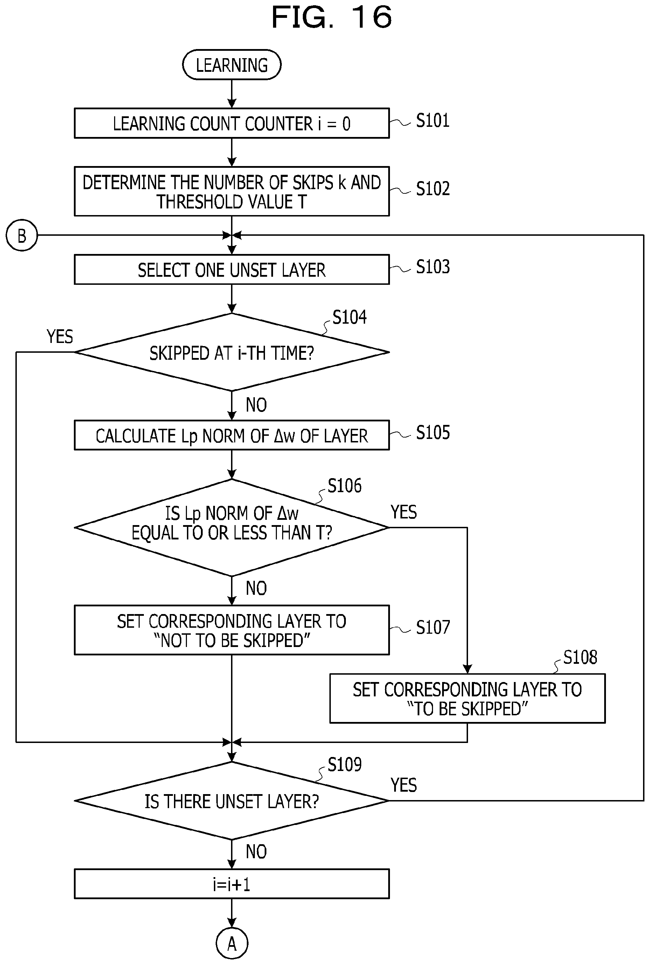

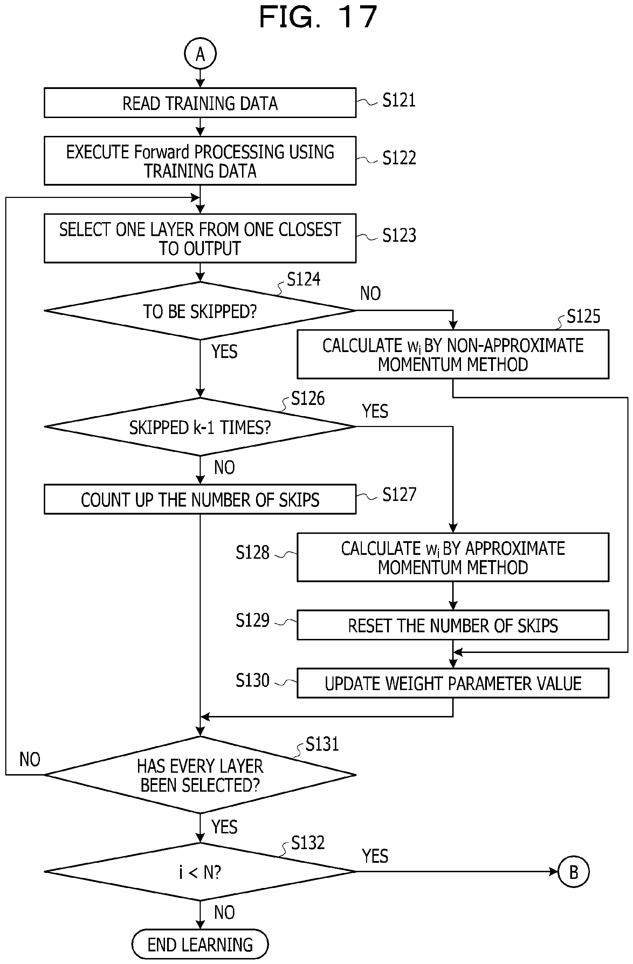

Next, a procedure of learning processing will be described in detail with reference to FIGs. 16 and 17.

FIG. 16 is a first half of a flowchart illustrating the procedure of the learning processing. The processing illustrated in FIG. 16 will be described below in accordance with step numbers.

[Step S101] The machine learning unit 150 sets a learning count counter i to the initial value "0" (i = 0).

[Step S102] The machine learning unit 150 determines the number of skips k and a threshold value T. The threshold value T is a real number used to determine whether or not to skip the weight update processing. For example, the machine learning unit 150 determines, as the number of skips k and the threshold value T, a value set in advance by a user respectively in association with the number of skips k and a value set in association with the threshold value T.

[Step S103] The machine learning unit 150 selects one layer for which whether or not to skip the weight update processing in the next learning has not been set.

[Step S104] The machine learning unit 150 determines whether or not the weight update processing has been skipped for the selected layer in the i-th (previous) learning. For example, if the number of skips for the corresponding layer is "1" or more in the skip management table 141, the machine learning unit 150 determines that the weight update processing has been skipped. If the weight update processing has been skipped, the machine learning unit 150 advances the processing to step S109. On the other hand, if the weight update processing has not been skipped, the machine learning unit 150 advances the processing to step S105.

Note that while the learning count counter i is equal to or less than 2k, the machine learning unit 150 gives NO as the result of the determination in step S104 for every layer, and advances the processing to step S109. As a result, whether or not to skip may remain in the initial state "not to be skipped" until it becomes possible to perform approximate calculation using a momentum method when the weight update processing has been skipped.

[Step S105] The machine learning unit 150 calculates an Lp norm of $\Delta w$ of the selected layer (p is an integer of 1 or more). $\Delta w$ is a weight update amount vector that includes, as an element, an update amount of a weight parameter value of data input to a node in the selected layer. The update amount of the weight parameter value corresponds to a difference between the value before the update and the value after the update. When the update amount of the weight parameter value of the selected layer is "$\Delta w_1, \Delta w_2, ..., \Delta w_n$", the weight update amount vector $\Delta w$ is "$\Delta w = (\Delta w_1, \Delta w_2, ..., \Delta w_n)$".

The Lp norm of $\Delta w$ is given by the following equation .
[Equation 29]

$$\sqrt[p]{|\Delta w_1|^p + |\Delta w_2|^p + \cdots + |\Delta w_n|^p} \qquad (29)$$

For example, an L1 norm of $\Delta w$ is as follows.
[Equation 30]

$$|\Delta w_1| + |\Delta w_2| + \cdots + |\Delta w_n| \qquad (30)$$

Furthermore, an L2 norm of $\Delta w$ is as follows.
[Equation 31]

$$\sqrt{|\Delta w_1|^2 + |\Delta w_2|^2 + \cdots + |\Delta w_n|^2} \qquad (31)$$

For example, in a case where the set threshold value T is a threshold value of the L2 norm of $\Delta w$, the machine learning unit 150 calculates the L2 norm of $\Delta w$.

[Step S106] The machine learning unit 150 determines whether or not the Lp norm of $\Delta w$ is equal to or less than the threshold value T. If the Lp norm of $\Delta w$ is equal to or less than the threshold value T, the machine learning unit 150 advances the processing to step S108. On the other hand, if the Lp norm of $\Delta w$ is larger than the threshold value, the machine learning unit 150 advances the processing to step S107.

[Step S107] The machine learning unit 150 sets the selected layer to "not to be skipped". For example, the machine learning unit 150 sets "not to be skipped" for a record corresponding to the selected layer in the skip management table 141. The machine learning unit 150 then advances the processing to step S109.

[Step S108] The machine learning unit 150 sets the selected layer to "to be skipped". For example, the machine learning unit 150 sets "to be skipped" for the record corresponding to the selected layer in the skip management table 141.

[Step S109] The machine learning unit 150 determines whether or not there is a layer for which whether or not to skip has not been set. If there is a layer for which whether or not to skip has not been set, the machine learning unit 150 advances the processing to step S103. On the other hand, if the setting of whether or not to skip has been completed for every layer, the machine learning unit 150 advances the processing to step S110.

[Step S110] The machine learning unit 150 adds 1 to the learning count counter i (i = i + 1), and advances the processing to step S121 (see FIG. 17).

FIG. 17 is a latter half of the flowchart illustrating the procedure of the learning processing. The processing illustrated in FIG. 17 will be described below in accordance with step numbers.

[Step S121] The machine learning unit 150 reads training data from the training data storage unit 120.

[Step S122] The machine learning unit 150 executes Forward processing using the read training data. For example, using input data for training included in the training data as an input to a node in an input layer of the model, the machine learning unit 150 performs calculations in accordance with a neural network indicated by the model, and obtains an output value from an output layer.

[Step S123] The machine learning unit 150 selects one layer in order from the one closest to the output.

[Step S124] The machine learning unit 150 refers to the skip management table 141 and determines whether or not the selected layer has been set to "to be skipped" in the setting of whether or not to skip. If the selected layer has been set to "to be skipped", the machine learning unit 150 advances the processing to step S126. On the other hand, if the selected layer has been set to "not to be skipped", the machine learning unit 150 advances the processing to step S125.

[Step S125] The machine learning unit 150 uses a non-approximate momentum method (Equation (2) and Equation (3)) to calculate a value $w_i$ after an update of each weight parameter for the data input to the node in the selected layer. The machine learning unit 150 then advances the processing to step S130.

[Step S126] The machine learning unit 150 determines whether or not the number of skips for the selected layer has reached k-1. For example, if the number of skips for the selected layer has reached k-1 in the skip management table 141, the machine learning unit 150 determines that the number of skips has reached k-1. If the number of skips has reached k-1, the machine learning unit 150 advances the processing to step S128. On the other hand, if the number of skips is less than k-1, the machine learning unit 150 advances the processing to step S127.

[Step S127] The machine learning unit 150 skips the weight update processing for the selected layer, and counts up the number of skips for the corresponding layer in the skip management table 141. The machine learning unit 150 then advances the processing to step S131.

[Step S128] The machine learning unit 150 uses a momentum method using approximate processing (Equation (28)) to calculate a value $w_i$ after an update of each weight parameter for the data input to the node in the selected layer. Note that the machine learning unit 150 may calculate a value $w_i$ after an update of each weight parameter by using a formula obtained by multiplying a momentum term (the second term on the right-hand side) in Equation (6) by a coefficient of 1 or more (a value corresponding to an amount of adjustment using a hyperparameter illustrated in FIGs. 8 and 9).

[Step S129] The machine learning unit 150 resets the number of skips for the selected layer in the skip management table 141 to "0".

[Step S130] The machine learning unit 150 updates the weight parameter value of the selected layer to the value calculated in step S125 or step S128.

[Step S131] The machine learning unit 150 determines whether or not every layer has been selected. If there is a layer that has not been selected, the machine learning unit 150 advances the processing to step S123. On the other hand, if every layer has been selected, the machine learning unit 150 advances the processing to step S132.

[Step S132] The machine learning unit 150 determines whether or not the learning count counter $i$ is less than the number of times learning is to be executed N (N is an integer of 1 or more) set in advance. If the learning count counter $i$ is less than N, the machine learning unit 150 advances the processing to step S103 (see FIG. 16). On the other hand, if the learning count counter $i$ has reached N, the machine learning unit 150 ends the learning.

In this way, even in a case where the weight parameter value update processing has been skipped for some of the layers and the error gradient has not been obtained, approximation using a momentum method may be used to enable high-speed processing without accuracy deterioration.

[Other embodiments]

In the second embodiment, whether or not the weight update processing is to be skipped is determined on the basis of the norm of $\Delta w$. Alternatively, it is also possible to determine whether or not the weight update processing is to be skipped by comparing each of absolute values $|\Delta w_1|, |\Delta w_2|,..., |\Delta w_n|$ of the elements of $\Delta w$ with the threshold value T. For example, if all of the absolute values $|\Delta w_1|, |\Delta w_2|,..., |\Delta w_n|$ of the elements of $\Delta w$ are equal to or less than the threshold value T, the learning device 100 determines that the weight update processing is to be skipped.

Furthermore, in the second embodiment, the learning processing is repeated until the number of times of learning reaches the number of times learning is to be executed N. Alternatively, the machine learning unit 150 may end the learning processing if the Lp norm of $\Delta w$ in the output layer has become equal to or less than a predetermined value.

The embodiments have been described above by way of example, and the configuration of each portion described in the embodiments may be replaced with another configuration having a similar function. Furthermore, any other components and steps may be added. Moreover, any two or more configurations (features) of the above-described embodiments may be combined.

**Claims**

1. A learning program executed by a computer, the learning program comprising:

    executing, in learning processing that is repeatedly executed for a model having a plurality of layers, update processing of a value of a parameter for at least one update suppression layer among the plurality of layers just once every k times (k is an integer of 2 or more) of the learning processing; and
    calculating, when the update processing of the value of the parameter for the update suppression layer is executed, a first value of the parameter after the update by a gradient descent method to which a momentum method is applied, by using a second value of the parameter calculated in the learning processing k times before and a third value of the parameter calculated in the learning processing 2k times before.

2. The learning program according to claim 1, wherein
    the calculating includes calculating the first value of the parameter by approximating a first error gradient to a second error gradient, the first error gradient being and error gradient in the learning processing in which the update processing of the value of the parameter has not been executed, the second being an gradient in the learning processing in which the update processing of the value of the parameter has been executed.

3. The learning program according to claim 1, wherein
    the calculating includes calculating the first value of the parameter by using a calculation formula, the calculation formula including a momentum, the momentum term being a term being multiplied by a difference and a predetermined coefficient, the difference being a difference between the value of the second parameter and the value of the third parameter.

4. The learning program according to any one of claims 1 to 3, further comprising:

   calculating, for each of the plurality of layers, a difference between a value before an update and a value after the update of the parameter in previous update processing, and
   determining whether or not a layer included in the plurality of layers is to be set as the update suppression layer based on the calculated difference.

5. The learning program according to according to claim 4, wherein
   the determining includes determining the layer to be set as the update suppression layer when a norm of a vector is equal to or less than a predetermined threshold value, the vector being based on differences between a values before and after an updating processing in the previous for each of the values, each of the values corresponding to each of a plurality of parameters in the layer.

6. A learning method comprising:

   executing, in learning processing that is repeatedly executed for a model having a plurality of layers, update processing of a value of a parameter for at least one update suppression layer among the plurality of layers just once every k times (k is an integer of 2 or more) of the learning processing; and
   calculating, when the update processing of the value of the parameter for the update suppression layer is executed, a first value of the parameter after the update by a gradient descent method to which a momentum method is applied, by using a second value of the parameter calculated in the learning processing k times before and a third value of the parameter calculated in the learning processing 2k times before.

7. The learning method according to claim 1, wherein
   the calculating includes calculating the first value of the parameter by approximating a first error gradient to a second error gradient, the first error gradient being and error gradient in the learning processing in which the update processing of the value of the parameter has not been executed, the second being an gradient in the learning processing in which the update processing of the value of the parameter has been executed.

8. The learning method according to claim 1, wherein
   the calculating includes calculating the first value of the parameter by using a calculation formula, the calculation formula including a momentum, the momentum term being a term being multiplied by a difference and a predetermined coefficient, the difference being a difference between the value of the second parameter and the value of the third parameter.

9. The learning method to according to any of claims 6 to 8, wherein the process further comprising:

   calculating, for each of the plurality of layers, a difference between a value before an update and a value after the update of the parameter in previous update processing, and
   determining whether or not a layer included in the plurality of layers is to be set as the update suppression layer based on the calculated difference.

10. The learning method according to according to claim 9, wherein
    the determining includes determining the layer to be set as the update suppression layer when a norm of a vector is equal to or less than a predetermined threshold value, the vector being based on differences between a values before and after an updating processing in the previous for each of the values, each of the values corresponding to each of a plurality of parameters in the layer.

11. A learning apparatus comprising:
    a processing unit configured to:

    execute, in learning processing that is repeatedly executed for a model having a plurality of layers, update processing of a value of a parameter for at least one update suppression layer among the plurality of layers just once every k times (k is an integer of 2 or more) of the learning processing, and
    calculate, when the update processing of the value of the parameter for the update suppression layer is executed, a first value of the parameter after the update by a gradient descent method to which a momentum method is applied, by using a second value of the parameter calculated in the learning processing k times before and a third value of the parameter calculated in the learning processing 2k times before.

12. The learning apparatus according to claim 11, wherein
   the processing unit calculates the first value of the parameter by approximating a first error gradient to a second error gradient, the first error gradient being and error gradient in the learning processing in which the update processing of the value of the parameter has not been executed, the second being an gradient in the learning processing in which the update processing of the value of the parameter has been executed.

13. The learning apparatus according to claim 11, wherein
   the processing unit calculates the first value of the parameter by using a calculation formula, the calculation formula including a momentum, the momentum term being a term being multiplied by a difference and a predetermined coefficient, the difference being a difference between the value of the second parameter and the value of the third parameter.

14. The learning apparatus according to any of claims 11 to 13, wherein:

   the processing unit calculates, for each of the plurality of layers, a difference between a value before an update and a value after the update of the parameter in previous update processing, and
   the processing unit determines whether or not a layer included in the plurality of layers is to be set as the update suppression layer based on the calculated difference.

15. The learning apparatus according to according to claim 14, wherein
   the processing unit determines the layer to be set as the update suppression layer when a norm of a vector is equal to or less than a predetermined threshold value, the vector being based on differences between a values before and after an updating processing in the previous for each of the values, each of the values corresponding to each of a plurality of parameters in the layer.

# FIG. 1

# FIG. 2

100

LEARNING DEVICE

| 101 | 104 |
|---|---|
| PROCESSOR | GRAPHIC PROCESSING DEVICE |

21

| 102 | 105 |
|---|---|
| MEMORY | INPUT INTERFACE |

22

23

| 103 | 106 |
|---|---|
| STORAGE DEVICE | OPTICAL DRIVE DEVICE |

24

| 108 | 107 |
|---|---|
| NETWORK INTERFACE | DEVICE CONNECTION INTERFACE |

25

109

26

27

20

NETWORK

# FIG. 3

40

INPUT LAYER  FIRST LAYER  SECOND LAYER   N-1TH LAYER   NTH LAYER (OUTPUT LAYER)

$W_{1,1}$  $W_{2,1}$  $W_{N-1,1}$

$W_{1,12}$  $W_{2,16}$  $W_{N-1,12}$

41

# FIG. 4

# FIG. 5

# FIG. 6

THE NUMBER OF TIMES OF LEARNING

|  | FIRST LAYER | SECOND LAYER | THIRD LAYER | FOURTH LAYER | FIFTH LAYER |
|---|---|---|---|---|---|
| #1 | ○ | ○ | ○ | ○ | ○ |
| #2 | ○ | ○ | ○ | ○ | ○ |
| #3 | ○ | ○ | ○ | ○ | ○ |
| #10 | ● | ○ | ○ | ○ | ○ |
| #11 | — | ○ | ○ | ○ | ○ |
| #100 | ● | ● | ○ | ○ | ○ |
| #101 | — | — | ○ | ○ | ○ |
| #1000 | ● | ● | ● | ○ | ○ |
| #1001 | — | — | — | ○ | ○ |

71    72    73    74    75

○: Lp NORM OF Δw IS LARGER THAN T
●: Lp NORM OF Δw IS T OR LESS
—: WEIGHT UPDATE PROCESSING IS SKIPPED

# FIG. 7

SGD (MOMENTUM METHOD IS NOT APPLIED)                    81

SGD (MOMENTUM METHOD IS APPLIED)                    82

FIG. 8

# FIG. 9

# FIG. 10

# FIG. 11

FIG. 12

THE NUMBER OF TIMES OF LEARNING

# FIG. 13

LEARNING DEVICE 100

WEIGHT INFORMATION STORAGE UNIT 130

SKIP INFORMATION STORAGE UNIT 140

MACHINE LEARNING UNIT 150

MODEL STORAGE UNIT 110

TRAINING DATA STORAGE UNIT 120

# FIG. 14

130

131

| THE NUMBER OF TIMES OF LEARNING / LAYER | 1 | 2 | 3 | ··· |
|---|---|---|---|---|
| FIRST LAYER | $W_{1,1,1}$ | $W_{1,1,2}$ | $W_{1,1,3}$ | ··· |
| | $W_{1,2,1}$ | $W_{1,2,2}$ | $W_{1,2,3}$ | ··· |
| | ··· | ··· | ··· | ··· |
| SECOND LAYER | $W_{2,1,1}$ | $W_{2,1,2}$ | $W_{2,1,3}$ | ··· |
| | $W_{2,2,1}$ | $W_{2,2,2}$ | $W_{2,2,3}$ | ··· |
| | ··· | ··· | ··· | ··· |
| ··· | ··· | ··· | ··· | ··· |

WEIGHT PARAMETER VALUE $\quad W_{2,2,3}$

LAYER

THE NUMBER OF TIMES OF LEARNING

WEIGHT PARAMETER NUMBER IN LAYER

# FIG. 15

140

141

| LAYER | WHETHER OR NOT TO SKIP | THE NUMBER OF SKIPS |
|---|---|---|
| FIRST LAYER | TO BE SKIPPED | 1 |
| SECOND LAYER | TO BE SKIPPED | 2 |
| THIRD LAYER | NOT TO BE SKIPPED | 0 |
| . . . | . . . | . . . |

# FIG. 16

```
                    ( LEARNING )
                         │
    ┌────────────────────────────────────────┐
    │   LEARNING COUNT COUNTER i = 0          │──── S101
    └────────────────────────────────────────┘
                         │
    ┌────────────────────────────────────────┐
    │ DETERMINE THE NUMBER OF SKIPS k AND     │──── S102
    │        THRESHOLD VALUE T                │
    └────────────────────────────────────────┘
                         │
  (B)─────────────────►  │
    ┌────────────────────────────────────────┐
    │         SELECT ONE UNSET LAYER          │──── S103
    └────────────────────────────────────────┘
                         │
              S104
        YES  ◇ SKIPPED AT i-TH TIME? ◇
    ◄────────│
             │ NO
    ┌────────────────────────────────────────┐
    │   CALCULATE Lp NORM OF Δw OF LAYER      │──── S105
    └────────────────────────────────────────┘
                         │
              S106
         ◇ IS Lp NORM OF Δw          ◇  YES
         ◇ EQUAL TO OR LESS THAN T?  ◇────►
                         │ NO
    ┌────────────────────────────────────────┐
    │      SET CORRESPONDING LAYER TO         │──── S107
    │        "NOT TO BE SKIPPED"              │
    └────────────────────────────────────────┘

                          ┌──────────────────────────────┐
                          │  SET CORRESPONDING LAYER TO   │──── S108
                          │       "TO BE SKIPPED"         │
                          └──────────────────────────────┘
                         │
              S109
         ◇ IS THERE UNSET LAYER? ◇  YES
                         │ NO
    ┌────────────────────────────────────────┐
    │                 i=i+1                   │
    └────────────────────────────────────────┘
                         │
                        (A)
```

# FIG. 17

(A)

READ TRAINING DATA — S121

EXECUTE Forward PROCESSING USING TRAINING DATA — S122

SELECT ONE LAYER FROM ONE CLOSEST TO OUTPUT — S123

S124 — TO BE SKIPPED? — NO

CALCULATE $w_i$ BY NON-APPROXIMATE MOMENTUM METHOD — S125

YES

S126 — SKIPPED k-1 TIMES? — YES

NO

COUNT UP THE NUMBER OF SKIPS — S127

S128 — CALCULATE $w_i$ BY APPROXIMATE MOMENTUM METHOD

S129 — RESET THE NUMBER OF SKIPS

S130 — UPDATE WEIGHT PARAMETER VALUE

NO — S131 — HAS EVERY LAYER BEEN SELECTED?

YES

S132 — i < N? — YES — (B)

NO

END LEARNING

Europäisches
Patentamt

European
Patent Office

Office européen
des brevets

# EUROPEAN SEARCH REPORT

Application Number

EP 21 15 4524

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIN FU ET AL: "A hierarchical approach to deep learning and its application to tomographic reconstruction", ARXIV.ORG, CORNELL UNIVERSITY LIBRARY, 201 OLIN LIBRARY CORNELL UNIVERSITY ITHACA, NY 14853, 16 December 2019 (2019-12-16), XP081559963, * abstract * * paragraph [02.4]; figure 6 * | 1-15 | INV. G06N3/04 G06N3/08 |
| X | US 2020/082269 A1 (GAO SHUANG [US] ET AL) 12 March 2020 (2020-03-12) * figures 2-4 * * paragraphs [0028] - [0053] * | 1-15 | |
| X | XIAO XUELI ET AL: "Fast Deep Learning Training through Intelligently Freezing Layers", 2019 INTERNATIONAL CONFERENCE ON INTERNET OF THINGS (ITHINGS) AND IEEE GREEN COMPUTING AND COMMUNICATIONS (GREENCOM) AND IEEE CYBER, PHYSICAL AND SOCIAL COMPUTING (CPSCOM) AND IEEE SMART DATA (SMARTDATA), IEEE, 14 July 2019 (2019-07-14), pages 1225-1232, XP033637632, DOI: 10.1109/ITHINGS/GREENCOM/CPSCOM/SMARTDATA.2019.00205 [retrieved on 2019-10-17] * abstract * * chapter III. method * | 1-15 | TECHNICAL FIELDS SEARCHED (IPC) G06N |

The present search report has been drawn up for all claims

| Place of search | Date of completion of the search | Examiner |
|---|---|---|
| The Hague | 15 July 2021 | Piriou, Nominoë |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 21 15 4524

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2021

| Patent document cited in search report | Publication date | Patent family member(s) | Publication date |
|---|---|---|---|
| US 2020082269 A1 | 12-03-2020 | CN 110895715 A<br>US 2020082269 A1 | 20-03-2020<br>12-03-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017182320 A